**Europäisches Patentamt**

**European Patent Office**

**Office européen des brevets**

(19)

(11) Veröffentlichungsnummer : **0 472 493 B1**

(12) **EUROPÄISCHE PATENTSCHRIFT**

(45) Veröffentlichungstag der Patentschrift :
**14.12.94 Patentblatt 94/50**

(51) Int. Cl.⁵ : **G03B 27/73, G03B 27/72**

(21) Anmeldenummer : **91810622.0**

(22) Anmeldetag : **08.08.91**

(54) Belichtungssteuerungsverfahren und fotografisches Kopiergerät.

(30) Priorität : **17.08.90 CH 2673/90**

(43) Veröffentlichungstag der Anmeldung :
**26.02.92 Patentblatt 92/09**

(45) Bekanntmachung des Hinweises auf die
Patenterteilung :
**14.12.94 Patentblatt 94/50**

(84) Benannte Vertragsstaaten :
**CH DE FR GB IT LI**

(56) Entgegenhaltungen :
**US-A- 3 536 402
US-A- 3 594 081
US-A- 4 239 385**

(73) Patentinhaber : **GRETAG IMAGING AG
Althardstrasse 70
CH-8105 Regensdorf (CH)**

(72) Erfinder : **Strobel, Christa
Wilhofstrasse 14
CH-8125 Zollikerberg (CH)**
Erfinder : **Brönnimann, Rolf, Dr.
Meierwiesenstrasse 61
CH-8107 Buchs (CH)**

(74) Vertreter : **Kleewein, Walter, Dr. et al
Patentabteilung
CIBA-GEIGY AG
Postfach
CH-4002 Basel (CH)**

## Beschreibung

Die Erfindung betrifft ein Belichtungssteuerungsverfahren zur bereichsweisen Dichtebeeinflussung von fotografischen Kopien gemäss Oberbegriff des Patentanspruchs 1 und ein fotografisches Kopiergerät gemäss Oberbegriff des Patentanspruchs 13.

Bei der Herstellung von qualitativ hochwertigen Kopien (z.B. Positivbildern) von Kopiervorlagen (z.B. Negativen oder Diapositiven) werden hohe Anforderungen an das Fachkönnen des Bedienungspersonals bei manueller Belichtung bzw. an die Mess- und Auswerteeinrichtungen und das Belichtungssteuerungsverfahren bei automatischen fotografischen Kopiergeräten gestellt. Bei den bekannten Belichtungssteuerungsverfahren in fotografischen Kopiergeräten werden die Kopiervorlagen bereichsweise abgetastet und ausgemessen. Aus den Messwerten werden Dichte- bzw. Farbkorrekturwerte ermittelt und damit die erforderlichen Kopierlichtmengen bestimmt. In einer Belichtungsstation werden sodann die fotografischen Kopien durch Belichtung von Kopiermaterial mit den ermittelten Kopierlichtmengen erstellt. Dabei wird die Kopiervorlage gesamthaft und an jeder Stelle mit Kopierlicht der gleichen Intensität beaufschlagt.

Dieses integrale Belichtungsverfahren erlaubt keinerlei individuelle Beeinflussung der zu erstellenden Kopien, sei es um besondere Effekte zu erzielen oder mehr noch um fehlerhaft belichtete Kopiervorlagen oder Kopiervorlagen mit übermässig hohem Konstrastumfang zu korrigieren. Bei der Erstellung von fotografischen Kopien ist man vielfach mit Kopiervorlagen konfrontiert, die über- oder unterbelichtete Bereiche aufweisen. Mit den bekannten integralen Belichtungsverfahren resultieren daraus oftmals fotografische Kopien mit unter- oder überbelichteten Bereichen, in denen bildrelevante Einzelheiten verschwinden. Eine Korrektur der Kopierlichtmengen wirkt sich jeweils nur gesamthaft auf die Kopie aus. Beispielsweise werden durch eine Reduktion der Kopierlichtmengen zwar ansonsten zu dunkle Bereiche aufgehellt, so dass Einzelheiten wieder sichtbar werden, zugleich aber werden auch die korrekt belichteten Bereiche der Kopiervorlage zu hell wiedergegeben, was wiederum zu einem Informationsverlust in diesen meist bildwichtigen Breichen führt. Eine Erhöhung der Kopierlichtmengen um Details in ansonsten zu hellen Bereichen sichtbar zu machen, resultiert wiederum darin, dass die korrekt belichteten Bereiche zu dunkel wiedergegeben werden.

Aus der EP-A-315,589 ist bekannt, dass man sich bei manuellen Belichtungsverfahren mit Dichtemasken behilft, die vor der Kopiervorlage in den Strahlengang des Kopierlichtes gehalten werden, um über- oder unterbelichtete Bereiche der Kopiervorlage in der fotografischen Kopie zu kompensieren. Zu diesem Verfahren, bei dem sich der Hobby- oder der Profifotograf die jeweilige Dichtemaske aus Filmresten und anderen Materialien zusammenbastelt, ist ausgeführt, dass die korrekte Anordnung der Dichtemasken im Strahlengang des Kopierlichtes sehr zeitaufwendig und überdies kaum reproduzierbar ist. Ausserdem ist diese Form der lokalen Dichtebeeinflussung erst nach Erstellung der fotografischen Kopie auf ihre Richtigkeit überprüfbar, so dass eine insgesamt korrekt erscheinende Kopie oftmals erst nach mehreren Versuchen erzielt wird. Aus diesem Grund wird in der EP-A-315,589 und auch in der DE-A-2,820,965 vorgeschlagen, die bereichsweise Dichtekorrektur mit Hilfe einer opto-elektrischen Maske durchzuführen, die vor der Kopiervorlage im Strahlengang des Kopierlichtes angeordnet wird. Insbesondere werden in diesen beiden Druckschriften Masken aus matrixartig angeordneten Flüssigkristallelementen beschrieben, deren Transparenz individuell aufgrund elektrischer Steuersignale veränderbar ist. Zur Kontrolle und Ueberprüfung der auf diese Weise erzielbaren lokalen Dichtebeeinflussung ist zwischen der Kopiervorlage und dem Kopiermaterial ein Strahlteilerelement angeordnet, mit Hilfe dessen ein Teil des von der Maske und der Kopiervorlage kommenden Lichts ausgekoppelt und einer Videokamera samt angeschlossener Bildprozessoreinheit zugeführt wird. Das aufbereitete und ins Positive umgekehrte Bild kann sodann auf einem Bildschirm überprüft und gegebenenfalls nachgeregelt werden.

Während mit Hilfe von Flüssigkristallmasken auf komfortable Art und Weise lokale Dichtebeinflussungen durchgeführt werden können, weisen Flüssigkristallmasken doch eine Reihe von Nachteilen auf. Flüssigkristalle haben eine relativ geringe Langzeitstabilität. Auch sind sie relativ temperaturempfindlich. Bedenkt man, dass im Dauerbetrieb eines fotografischen Kopiergerätes in der Belichtungsstation beachtlich hohe Temperaturen auftreten, so ist leicht einsichtig, dass zusätzlicher Aufwand zur Kühlung der Flüssigkristallmaske betrieben werden muss, will man eine vorzeitige gesamthafte oder auch nur bereichsweise Degradation der Flüssigkristallmaske verhindern. Ein besonders grosser Nachteil von Flüssigkristallmasken ist ihre mangelnde Farbechtheit. Damit ist gemeint, dass insbesondere bei Uebergängen von Bereichen hoher Transmission zu Bereichen geringerer Transmission der Maske Farbtönungen auftreten können, die sich natürlich äusserst negativ auf den farblichen Eindruck der zu erstellenden Kopien auswirken. Ein weiterer Nachteil der Flüssigkkristallmasken besteht darin, dass die matrixartige Anordnung der Flüssigkristallelemente nicht verändert werden kann. Somit stimmen oftmals die Anordnung der Matrixelemente der Flüssigkristallmaske und die der Abtastpunkte der Kopiervorlage nicht überein. Ueberdies ist das gesamte Konzept der lokalen Dichtebeeinflussung der zu erstellenden Kopien mit Hilfe von Flüssigkristallmasken mit einem grossen elektrischen und elektronischen Aufwand verbunden. Das System ist nicht zuletzt aufgrund der erforderlichen zusätzlichen Kühleinrichtungen sehr teuer und zudem nur schwer in bereits bestehende Geräte einbaubar. Die Ergebnisse der lokalen Dichtebeeinflussung sind nur mit Hilfe weiterer, sehr teurer Geräte (Bildaufnahmegerät, Bildprozessor, Strahlteiler) auf einem Bildschirm kontrollierbar. Das dazu im Strahlengang des Kopierlichtes nötige Strahlteilerelement kann ausserdem eine zusätzliche Fehlerquelle bei der Belichtung darstellen.

Aufgabe der vorliegenden Erfindung ist es daher, ein Belichtungssteuerungsverfahren zur bereichsweisen Dichtebeeinflussung von fotografischen Kopien und ein fotografisches Kopiergerät bereitzustellen, bei dem den vorstehenden Nachteilen abgeholfen wird.

Diese und noch weitere Aufgaben werden durch ein Belichtungssteuerungsverfahren gemäss Kennzeichen des Patentanspruchs 1 sowie durch ein fotografisches Kopiergerät gemäss Kennzeichen des Patentanspruchs 13 gelöst.

Weitere besonders vorteilhafte Verfahrens- und Ausführungsvarianten des fotografischen Kopiergerätes sind Gegenstand der abhängigen Patentansprüche. Im folgenden werden das erfindungsgemässe Belichtungssteuerungsverfahren und das zugehörige erfindungsgemässe fotografische Kopiergerät anhand der beispielsweisen Zeichnungen näher erläutert. Es zeigen in zum Teil schematischer Darstellung:

Fig. 1     einen Kopierlichtstrahlengang in einem erfindungsgemässen fotografischen Kopiergerät,
Fig. 2     ein Ausführungsbeispiel einer in Fig. 1 mit 10 bezeichneten Dämpfungseinrichtung und
Fig. 3     ein zweites Beispiel einer Maske.

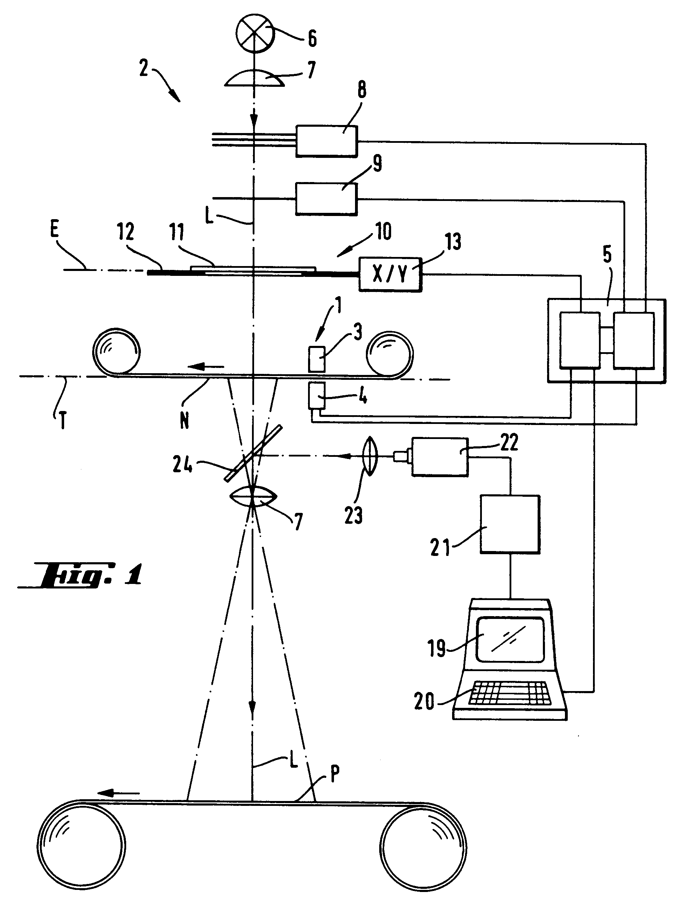

Ein in Fig. 1 schematisch dargestelltes fotografisches Kopiergerät umfasst eine Messstation 1, eine Belichtungsstation 2 und eine Rechen- und Auswerteinheit 5. Die Messstation weist im wesentlichen eine Messlichtquelle 3 und eine Detektoranordnung 4 auf. Eine zwischen der Messlichtquelle 3 und der Detektoranordnung 4 in einer Transportebene T transportierte Kopiervorlage N wird vom Lichtstrahlenbündel der Messlichtquelle 3 bereichsweise, vorzugsweise punktweise, abgetastet. Das von der Kopiervorlage N transmittierte Messlicht trifft auf die Detektoranordnung 4. Es versteht sich, dass bei nicht transparenten Kopiervorlagen N eine Analyse derselben durch Detektion des remittierten Messlichtes erfolgen kann. Zu diesem Zweck sind die Messlichtquelle 3 und die Detektoranordnung 4 allerdings vorteilhafterweise beide auf der die Information tragenden Seite der Kopiervorlage N angeordnet. Die Detektoranordnung 4 umfasst einen Detektor, der die Lichtsignale in elektrische Signale umformt. Der Detektor kann als bewegbarer Einzeldetektor, als Zeilendetektor oder vorzugsweise als flächiger, matrixartig aufgebauter CCD-Detektor (Charge-Coupled-Device) ausgebildet sein. Insbesondere bei zeilenförmigen Detektoren und mehr noch bei flächigen Detektoren ergibt sich die Möglichkeit einer einfachen Zuordnung der detektierten Signale zu den Ortkoordinaten des Abtastpunktes der Kopiervorlage N in der Transportebene T. Die horizontalen Ortskoordinaten in der Transportebene T in Transportrichtung werden dabei mit x und die vertikalen Ortskoordinaten der Abtastpunkte in der Transportebene T senkrecht zur Transportrichtung werden mit y bezeichnet. Die Detektoranordnung 4 ist an die Rechen- und Auswerteinheit 5 angeschlossen und leitet die detektierten und umgewandelten Signale an diese weiter.

Die Belichtungsstation 2 umfasst eine Projektionsanordnung mit einer Kopierlichtquelle 6, mit vorzugsweise servogesteuerten Farbfiltern 8, mit einem Verschluss 9 und mit einer Projektionsoptik 7, und eine Dämpfungseinrichtung 10 zum bereichsweisen Abschwächen der Intensität des Kopierlichtes der Kopierlichtquelle 6.

Im Unterschied zu den bekannten Vorrichtungen umfasst die Dämpfungseinrichtung 10 des erfindungsgemässen fotografischen Kopiergerätes eine transparente Maske 11 mit Bereichen unterschiedlicher Lichtdurchlässigkeit oder Dichte. Die Maske 11 ist auf einer Verschiebeeinrichtung 12 angeordnet und in einer zur Transportebene T der Kopiervorlage N parallelen Verschiebeebene E im Strahlengang L des Kopierlichtes der Kopierlichtquelle 6 verschiebbar. Die Maske 11 ist vorzugsweise als Graumaske mit Graubereichen unterschiedlicher Lichtdurchlässigkeit ausgebildet. Die Maske 11 kann aber auch unterschiedlich dichte Bereiche einer Farbe oder mehrerer verschiedener Farben, insbesondere der Grundfarben Rot, Blau und Grün aufweisen. Da Graumasken in den Uebergängen von dichten zu weniger dichten Bereichen oftmals Farbtönungen aufweisen, wird die Maske 11 vorzugsweise als Rastergraphik ausgebildet. Dabei werden die unterschiedlichen Grauabstufungen vorzugsweise durch Schwärzungspunkte unterschiedlicher Grösse auf der Maske 11 realisiert. Es besteht auch die Möglichkeit, die unterschiedlichen Grauabstufungen der Maske durch eine unterschiedlich grosse Anzahl von gleich grossen Schwärzungspunkten je Flächeneinheit herzustellen. Bei der Verwendung derartig ausgebildeter Masken 11 muss jedoch dafür Sorge getragen werden, dass die Verschiebeebene E der Maske 11 ausserhalb des Fokussierungsbereiches der Projektionsoptik 7 liegt. Selbstverständlich können auch Masken aus fotografischem Material mit örtlich unterschiedlicher Lichtdurchlässigkeit verwendet werden. Ueblicherweise wird die Maske 11 zwischen der Kopierlichtquelle 6 und der Kopiervorlage angeordnet. Sie könnte aber auch im Strahlengang des Kopierlichtes gesehen, nach der Kopiervorlage N angeordnet sein.

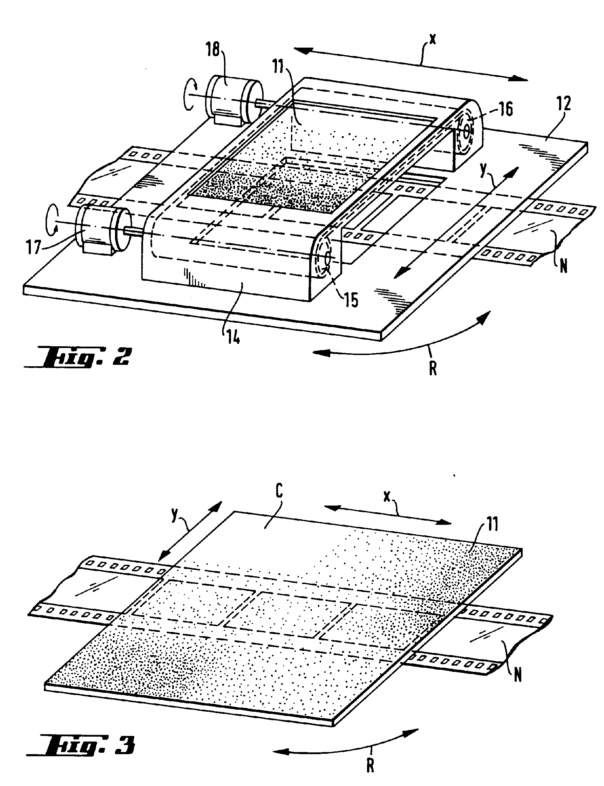

In Fig. 2 ist ein Ausführungsbeispiel der erfindungsgemässen Dämpfungseinrichtung 10 dargestellt. Die Maske 11 ist als Folie ausgebildet, die auf zwei motorisch antreibbare Rollen 15, 16 auf- und abspulbar ist. Im dargestellten Beispiel ist die Folie in einer Kassette 14 untergebracht. Die Kassette 14 ihrerseits ist auf einem Verschiebeschlitten 12 angeordnet, wobei ihre beiden Rollen 15, 16 an zwei auf dem Verschiebeschlitten 12 befestigten Motore 17, 18 lösbar ankuppelbar sind. Der Verschiebeschlitten 12 ist rahmenartig ausgebildet. Auf diese Weise kann das Kopierlicht durch ein Fenster in der Kassette 14 gesamthaft die Kopiervorlage N beaufschlagen. Die Kassette 14 ist als Gesamtheit mit der in ihr untergebrachten Folie auswechselbar, sodass sehr einfach verschiedene Arten von Masken 11 eingesetzt werden können. In Fig. 2 wurde aus Gründen der besseren Uebersicht auf eine Darstellung von Führungsschienen oder ähnlichem für den Verschiebeschlitten 12 und von Verschiebemotoren verzichtet. Auch eine in Fig. 1 angedeutete x-y-Steuereinrichtung 13 wurde nicht dargestellt. Die Ausgestaltung dieser nicht dargestellten Elemente und ihre elektrische und/oder mechanische Kupplung zu den dargestellten Einrichtungen sind an sich Stand der Technik. Zur Verschiebung der Maske 11 wird der Verschiebeschlitten 12 nach Vorgabe der x-y-Steuereinrichtung 13 parallel - Doppelpfeil x - und/oder senkrecht zur Transportrichtung der Kopiervorlage - Doppelpfeil y - in der Verschiebeebene E verschoben. Die jeweils zweite Koordinatenposition y bzw. x und die genaue Positionierung der Maske 11 erfolgt durch Umspulen der Folie von einer Rolle 15, 16 auf die andere 16 bzw. 15 unter Aktivierung der Motore 17 bzw. 18. Diese beiden Verschiebevorgänge können hintereinander erfolgen, vorzugsweise jedoch erfolgen sie simultan unter Steuerung durch die x-y-Steuereinrichtung 13. Mit dem Pfeil R ist in Fig. 2 auch noch angedeutet, dass der Verschiebeschlitten 12 vorzugsweise in der Verschiebeebene E drehbar ist. Besonders vorteilhaft ist es, wenn diese Drehbarkeit kontinuierlich ausführbar ist. Auf diese Weise lassen sich auch Masken 11 mit wenigen Bereichen unterschiedlicher Lichtdurchlässigkeit sehr vielfältig einsetzen und an die jeweiligen Erfordernisse anpassen.

In Fig. 3 ist eine als ebene Platte ausgebildete Maske 11 dargestellt. In der Figur wurde aus Gründen der besseren Uebersicht gänzlich auf den Verschiebeschlitten 12 und alle weiteren Elemente der Verschiebeeinrichtung verzichtet. Mit den Doppelpfeilen x und y und dem Pfeil R sind die horizontale und vertikale Verschiebbarkeit der Maske 11 und ihre Rotierbarkeit in der Verschiebeebene E angedeutet. Es ist deutlich ersichtlich, dass die Maske 11 einen Bereich C aufweist, der frei von Rasterpunkten ist und mindestens die Grösse der Abmessungen der Kopiervorlage N aufweist. Dieser Bereich C lässt das Kopierlicht im wesentlichen ungehindert passieren. Dieser Bereich ist insbesondere dann von grossem Nutzen, wenn der Verschiebeschlitten 12 mit der darauf angeordneten Maske 11 nicht immer aus einer Ruheposition ausserhalb des Strahlenganges L des Kopierlichtes der Kopierlichtquelle 6 in diesen hineinbewegt werden soll. Mit einer derart ausgebildeten Maske 11 kann eine Ruhestellung ausgewählt werden, in der die Maske 11 ständig im Strahlengang L derart angeordnet ist, dass der Bereich C der Maske 11 und die Kopiervorlage N einander überdecken, sodass das Koperlicht den Bereich C im wesentlichen ungehindert passieren kann und die Kopiervorlage N ungeschwächt gesamthaft beaufschlagen kann. Auf diese Weise sind die Verschiebewege kleiner, und der Aufwand für die Verschiebeeinrichtung ist deutlich reduziert.

Zur Erstellung von fotografischen Kopien P, deren Dichte bereichsweise beeinflusst werden soll, wird die Kopiervorlage N in der Messstation 1 bereichsweise, vorzugsweise punktförmig, abgetastet. Das von der Kopiervorlage N transmittierte oder remittierte Messlicht wird von der Detektionsanordnung 4 detektiert und in elektronische Messsignale umgeformt. Die elektrischen Messsignale werden an die Rechen- und Auswerteeinheit 5 weitergeleitet und dort weiterverarbeitet. Zum Einen werden aus den Messsignalen, die ja den ortsabhängigen Dichten der Abtastbereiche der Kopiervorlage N entsprechen, auf an sich bekannte Weise Dichte - bzw. Farbkorrekturwerte ermittelt. Mit Hilfe der ermittelten Dichte - bzw. Farbkorrekturwerte werden die erforderlichen Kopierlichtmengen, insbesondere Belichtungszeiten für die Erstellung der fotografischen Kopie P von der Kopiervorlage N bestimmt. Ein derartiges Verfahren zur Bestimmung der erforderlichen Kopierlichtmengen bzw. Belichtungszeiten ist beispielsweise in der EP-A-312,499 beschrieben. Andererseits werden die ortsabhängigen Dichten der Kopiervorlage N auch zur Ermittlung des Gesamtkontrastes bzw. Kontrastumfanges der Kopiervorlage N herangezogen. Wenn der Kontrastumfang der Kopiervorlage N, der im einfachsten Fall als Differenz zwischen dem maximalen und dem minimalen Dichtewert der Kopiervorlage N bestimmt wird, einen vorgebbaren Grenzwert überschreitet, wird die Kopiervorlage N als zu kontrastreich eingestuft und ein Regelmechanismus in Gang gesetzt. Ueblicherweise wird dieser Grenzwert für den Kontrastumfang der Kopiervorlage N zu einer Dichteeinheit gewählt. Die ortsabhängigen Dichtewerte der Kopiervorlage N werden in der Rechen- und Auswerteeinheit 5 in Matrixform zwischengespeichert. Dabei steht die Zeilennummer der Dichtematrix für die x Koordinate, d.h. für die horizontale Koordinate, in der Transportebene T und die Spaltennummer für die y Koordinate, somit für die vertikale Koordinate, in der Transportebene T. Die Dichtematrix der Kopiervorlage N wird mit einer ortsabhängigen Dichtematrix der verwendeten Maske 11 verglichen, die gleichfalls in der Rechen- und Auswerteeinheit 5 abgespeichert ist. Die Dichtematrix der Maske 11 weist die gleiche Ortsauflösung auf wie die Dichtematrix der Kopiervorlage N, d.h. dass die Abstände der einzelnen Ortskoordinaten einander entsprechen. Durch Vergleich der Dichtematrix der Kopiervorlage N mit der vorzugsweise mindestens viermal grösseren Dichtematrix der Maske 11 wird derjenige Bereich der Maske 11 ausgewählt, dessen ortsabhängiger Dichteverlauf dem inversen ortsabhängigen Dichteverlauf der Kopiervorlage

N am nächsten kommt. Die Ermittlung dieses Maskenbereiches erfolgt dabei nach dem Prinzip des kleinsten Fehlerquadrats. Insbesondere wird dabei gefordert, dass der Ausdruck

$$\sum_{x=0}^{X} \sum_{y=0}^{Y} [K(x_0+x, y_0+y) - \overline{K(x_0, y_0)} + a \cdot (N(x,y)-\overline{N})]^2 = \text{MIN}$$

ein Minimum darstellt. In diesem Ausdruck bedeuten die einzelnen Grössen: x, y sind die Ortskoordinaten des Dichteverlaufes der Kopiervorlage N parallel bzw. senkrecht zur Transportrichtung der Kopiervorlage N.

X bzw. Y stehen für die Anzahl der Abtastpunkte der Kopiervorlage N parallel bzw. senkrecht zur Transportrichtung. Die vier Endpunkte der Kopiervorlage sind dabei durch die Koordinaten (0,0), (0,Y), (X,0) und (X,Y) gegeben.

$x_0$, $y_0$ stehen für die Zeilen- bzw. Spaltennummer (Ortskoordinaten) eines Eckelements einer aus der vergleichenden Ueberlagerung der Dichtematrizen der Maske 11 und der Kopiervorlage N resultierenden Maskenteilmatrix.

N(x,y) ist der Dichteverlauf der Kopiervorlage und $\overline{N}$ die mittlere Dichte der Kopiervorlage, definiert durch

$$\overline{N} = \frac{1}{X \cdot Y} \sum_{x=0}^{X} \sum_{y=0}^{Y} N(x,y) \; .$$

K($x_0$+x, $y_0$+y) beschreibt den ortsabhängigen Dichteverlauf des ausgewählten Teilbereiches der Maske 11. Die Dimension der Maskenteilmatrix entspricht dabei der Dimension der Dichtematrix der Kopiervorlage N.

$\overline{K(x_0, y_0)}$ ist durch den Ausdruck

$$\overline{K(x_0, y_0)} = \frac{1}{X \cdot Y} \sum_{x=0}^{X} \sum_{y=0}^{Y} K(x_0+x, y_0+y)$$

definiert und beschreibt die mittlere Dichte des ausgewählten Maskenteilbereiches.

Die Terme N(x,y) - $\overline{N}$ bzw. K($x_0$+x, $y_0$+y) - $\overline{K(x_0,y_0)}$ beschreiben die Abweichung der Dichte des jeweiligen Ortspunktes der Kopiervorlage N bzw. des Teilbereiches der Maske 11 von der mittleren Dichte der Kopiervorlage N respektive des Maskenteilbereiches.

a stellt einen Skalierungsfaktor dar. Ueblicherweise wird der Skalierungsfaktor a derart aus einem Wertebereich grösser Null aber kleiner Eins ausgewählt, dass der Kontrast-umfang der erstellten fotografischen Kopie P höchstens zwei Dichteeinheiten beträgt. Insbesondere soll durch den Skalierungsfaktor a verhindert werden, dass bei der bereichsweisen Dichtekorrektur bewusst in die Kopiervorlage eingebrachte Aufhellungen (Aufnahmen mit Aufhellblitz) wieder rückgängig gemacht werden.

Es versteht sich, dass beim Vergleich der beiden Dichtematrizen die Dichtematrix der Kopiervorlage N bzw. die Dichtematrix der Maske 11 gedreht werden kann, um einen Bereich auszuwählen, der das vorgegebene Kriterium erfüllt. Diese Drehungen werden festgehalten und bei der anschliessenden Positionierung der Maske berücksichtigt. Die derart ermittelten Ortskoordinaten des ausgewählten Teilbereichs der Maske 11 werden an die x-y-Steuereinrichtung 12 der Verschiebeeinrichtung 12 für die Maske 11 weitergeleitet. Gemäss diesen Steuerdaten wird sodann die Maske 11 derart im Strahlengang L der Kopierlichtquelle 6 verschoben, dass der ausgewählte Teilbereich der Maske 11 gesamthaft mit dem Kopierlicht der Kopierlichtquelle 6 beaufschlagt wird.

Diese Form der bereichsweisen Dichtebeeinflussung kann überdies auf einfache Art vor der Erstellung der fotografischen Kopie kontrolliert werden. Dazu werden in der Rechen-und Steuereinheit 5 die gemessenen Dichten der Kopiervorlage N, die ermittelten Dichte-bzw. Farbkorrekturen und die ortsabhängigen Dichtewerte des ausgewählten Teilbereichs der Maske 11 überlagert, invertiert und in Videosignale umgewandelt. Die derart gebildeten Signale werden an eine in Fig. 1 mit 19 bezeichnete Bildschirmeinheit weitergeleitet, in der ein simuliertes Bild der zu erstellenden dichtekorrigierten fotografischen Kopie P erzeugt wird.

Das in Fig. 1 dargestellte fotografische Kopiergerät besitzt überdies noch weitere Einrichtungen zur Bildbeeinflussung. So weist die Bildschirmeinheit 19 eine Eingabetastatur 20 auf. Zudem ist die Bildschirmeinheit 19 noch mit einem Grafikprozessor 21 verbunden. Auf diese Weise können beispielsweise über die Tastatur 20 Texte erzeugt werden, die sodann über einen Projektor 22, eine Projektionslinse 23 und einen Ablenkspiegel 24 in den Strahlengang L des Kopierlichtes eingeblendet werden können und somit auf die fotografische Kopie P aufgebracht werden können. Neben dieser Einblendungsmöglichkeit von Texten sind noch viele weitere derartige Beeinflussungsmöglichkeiten der zu erstellenden fotografischen Kopie P vorstellbar.

Das erfindungsgemässe Belichtungssteuerungsverfahren erlaubt eine einfache Dichtekorrektur von fotografischen Kopien P zu kontrastreicher Kopiervorlagen N. Die verwendeten einfachen Dichtemasken, beispielsweise Glasplatten oder Folien mit unterschiedlichen Grauabstufungen, sind nur wenig temperaturempfindlich. Die Masken werden durch den Gebrauch nicht beschädigt und altern nicht frühzeitig. Das Problem von Farbstichen bei Uebergängen von Bereichen grosser Dichte zu Bereichen geringerer Dichte ist durch die Verwendung von Rastergraphikmasken behoben. Die Masken sind vor allem sehr einfach austauschbar und an das Abtastraster der Kopiervorlage angleichbar. Der elektrische und elektronische Aufwand ist gering, der zusätzliche mechanische ist gleichfalls nicht besonders hoch, sodass bestehende fotografische Kopiergeräte relativ einfach und kostengünstig nachgerüstet werden können. Die Ergebnisse der lokalen Dichtebeeinflussung können bequem auf einem Bildschirm vor der Erstellung der fotografischen Kopie kontrolliert werden. Ein weiterer zusätzlicher kostspieliger Geräteaufwand ist dazu nicht von Nöten, zusätzliche störende Strahlteilerelemente im Strahlengang der Kopierlichtquelle entfallen.

**Patentansprüche**

1. Belichtungssteuerungsverfahren zur bereichsweisen Dichtebeeinflussung von fotografischen Kopien (P), bei dem eine Kopiervorlage (N) in einer Messstation (1) bereichsweise, vorzugsweise punktförmig, vom Lichtstrahlenbündel einer Messlichtquelle (3) abgetastet wird, das von der Kopiervorlage (N) transmittierte oder remittierte Messlicht von einer Detektoranordnung (4) erfasst und in elektrische Signale umgewandelt wird, die Dichten der Abtastbereiche entsprechen, die elektrischen Messsignale einer Rechen- und Auswerteeinheit (5) zugeführt werden und zur Ermittlung von Dichte- bzw. Farbkorrekturwerten ausgewertet werden, mit Hilfe derer erforderliche Kopierlichtmengen und Belichtungszeiten bestimmt werden, die ermittelten Belichtungszeiten zur Steuerung einer Kopierlichtquelle (6) in einer Belichtungsstation (2) herangezogen werden, und gemäss vorgegebenen Kriterien die Intensität des die Kopiervorlage (N) gesamthaft beaufschlagenden Kopierlichtes mit Hilfe einer Dämpfungseinrichtung (10) bereichsweise abgeschwächt wird, dadurch gekennzeichnet, dass als Dämpfungseinrichtung (10) eine Maske (11) örtlich unterschiedlicher Lichtdurchlässigkeit verwendet wird, dass die einzelnen Dichten der Kopiervorlage (N) den Ortskoordinaten der zugehörigen Abtastbereiche in der Transportebene (T) der Kopiervorlage (N) zugeordnet und, vorzugsweise in Matrixform, in der Rechen- und Auswerteeinheit (5) zwischengespeichert werden, dass aus den ortsabhängigen Dichten ein Dichteumfang der Kopiervorlage (N) bestimmt wird, dass bei Ueberschreiten eines vorgebbaren Grenzwertes für den Dichteumfang der ortsabhängige Dichteverlauf der Kopiervorlage (N) mit einem vorzugsweise in bezüglich der Ortsauflösung äquivalenter Matrixform, abgespeicherten ortsabhängigen Dichteverlauf der Maske (11) verglichen wird, dass derjenige Bereich der Maske (11) ausgewählt wird, dessen ortsabhängiger Dichteverlauf dem inversen ortsabhängigen Dichteverlauf der Kopiervorlage (N) am nächsten kommt, dass die derart ermittelten Ortskoordinaten des ermittelten Dichteverlaufes des Teilbereiches der Maske (11) an eine x-y-Steuereinrichtung (13) einer Verschiebeeinrichtung (12) für die Maske (11) weitergeleitet werden, und dass die Maske (11) gemäss den ermittelten Ortskoordinaten derart im Strahlengang (L) der Kopierlichtquelle (6) verschoben wird, dass der ausgewählte Maskenteilbereich gesamthaft mit dem Kopierlicht der Kopierlichtquelle (6) beaufschlagt wird.

2. Verfahren nach Patentanspruch 1, dadurch gekennzeichnet, dass die Aehnlichkeit des gesuchten Dichtebereiches der Maske (11) mit dem invertierten ortsabhängigen Dichteverlauf der Kopiervorlage (N) gemäss dem Prinzip des kleinsten Fehlerquadrats derart ermittelt wird, das gilt

$$\sum_{x=0}^{X} \sum_{y=0}^{Y} [K(x_0+x, y_0+y) - \overline{K(x_0, y_0)} + a \cdot (N(x,y) - \overline{N})]^2 = MIN$$

ein Minimum darstellt,

wobei x und y für die Ortskoordinaten des ortsabhängigen Dichteverlaufes der Kopiervorlage (N) parallel bzw. senkrecht zur Transportrichtung der Kopiervorlage (N) stehen;

X bzw. Y die Anzahl der Abtastpunkte der Kopiervorlage (N) parallel bzw. senkrecht zur Transportrichtung bedeuten;

$x_0$, $y_0$ für die Zeilen- bzw. Spaltennummer (Ortskoordinaten) eines Eckelements einer aus der vergleichenden Ueberlagerung der Dichtematrizen der Maske (11) und der Kopiervorlage (N) resultierenden Maskenteilmatrix stehen;

$\underline{N(x,y)}$ der Dichteverlauf der Kopiervorlage (N) ist;

$\overline{N}$ für die mittlere Dichte der Kopiervorlage (N) steht;

$K(x_0+x, y_0+y)$ den ortsabhängigen Dichteverlauf des ausgewählten Teilbereiches der Maske (11) beschreibt;

$\overline{K(x_0, y_0)}$ für die mittlere Dichte des ausgewählten Maskenbereiches steht; und a einen Skalierungsfaktor darstellt.

3. Verfahren nach Patentanspruch 1 oder 2, dadurch gekennzeichnet, dass der Grenzwert für den Kontrastumfang der Kopiervorlage (N) zu einer Dichteeinheit gewählt wird.

4. Verfahren nach Patentanspruch 3, dadurch gekennzeichnet, dass der Skalierungsfaktor a derart aus dem Wertebereich grösser Null aber kleiner Eins gewählt wird, dass der Kontrastumfang der erstellten fotografischen Kopie (P) höchstens zwei Dichteeinheiten beträgt.

5. Verfahren nach einem der vorangehenden Patentansprüche, dadurch gekennzeichnet, dass die Maske (11) in einer parallel zur Transportebene (T) der Kopiervorlage (N) verlaufenden Ebene (E) zwischen der Kopierlichtquelle (6) und der Kopiervorlage (N) verschoben wird.

6. Verfahren nach Patentanspruch 5, dadurch gekennzeichnet, dass die Maske (11) in einer Ebene (E) ausserhalb des Fokussierbereiches einer Projektionsoptik (7) in der Belichtungsstation (2) verschoben wird.

7. Verfahren nach Patentanspruch 6, dadurch gekennzeichnet, dass eine Maske (11) verwendet wird, die in unterschiedlichen Graustufen als Rastergraphik mit Schwärzungspunkten unterschiedlicher Grösse ausgebildet wird.

8. Verfahren nach einem der vorangehenden Patentansprüche, dadurch gekennzeichnet, dass die Maske (11) aus einer Ruhelage ausserhalb des Strahlenganges (L) der Kopierlichtquelle (6) in den Strahlengang (L) verschoben wird.

9. Verfahren nach einem der Patentansprüche 1-7, dadurch gekennzeichnet, dass die Maske (11) während der Analyse der Kopiervorlage derart unter der Kopierlichtquelle (6) angeordnet wird, dass das Kopierlicht der Kopierlichtquelle (6) einen Teilbereich (C) der Maske (11) beaufschlagt, welcher das Kopierlicht im wesentlichen ungehindert passieren lässt.

10. Verfahren nach einem der vorangehenden Patenansprüche, dadurch gekennzeichnet, dass als Maske (11) eine plane Platte verwendet wird und dass der ermittelte Maskenteilbereich durch Verschiebung eines motorisch antreibbaren Verschiebeschlittens (12) parallel und senkrecht zur Transportrichtung der Kopiervorlage (N) korrekt positioniert wird.

11. Verfahren nach einem der Patentansprüche 1-7, dadurch gekennzeichnet, dass die Maske (11) als Folie ausgebildet wird, welche auf zwei motorisch antreibbare Rollen (15, 16) aufgewickelt wird, die ihrerseits auf einem parallel und/oder senkrecht zur Transportrichtung der Kopiervorlage (N) verschiebbaren, motorisch antreibbaren Schlitten (12) angeordnet werden, und dass man zur Positionierung des ermittelten Maskenteilbereiches einerseits den Schlitten (12) parallel (x) und/oder senkrecht (y) zur Transportrichtung in den Strahlengang (L) der Kopierlichtquelle (6) schiebt und andererseits die zweite Koordinatenposition (y oder x) durch Umspulen der Folie von der einen Rolle (15 bzw. 16) auf die andere (16 bzw. 15) einstellt.

12. Verfahren nach einem der vorangehenden Patentansprüche, dadurch gekennzeichnet, dass in der Rechen- und Auswerteeinheit (5) die gemessenen Dichten der Kopiervorlage (N), die ermittelten Dichte- bzw. Farbkorrekturen und die ortsabhängigen Dichtewerte des ausgewählten Maskenteilbereichs überlagert, invertiert und in Videosignale umgewandelt werden, und dass die derart gebildeten Signale an eine Bildschirmeinheit ( 19) weitergeleitet werden, in der ein simuliertes Bild der zu erstellenden dichtekorrigierten fotografischen Kopie (P) erzeugt wird.

13. Fotografisches Kopiergerät zur Erstellung von fotografischen Kopien (P) von Kopiervorlagen (N) mit einer Messstation (1), welche eine Messlichtquelle (3) und eine Detektoranordnung (4) umfasst, mit einer Rechen- und Auswerteeinheit (5) und mit einer Belichtungsstation (2), welche eine Projektionsanordnung mit Kopierlichtquelle (6), servogesteuerten Farbfiltern (8), Verschluss (9) und Projektionsoptik (7) und eine Dämpfungseinrichtung (10) zum bereichsweisen Abschwächen der Intensität des Kopierlichtes aufweist, dadurch gekennzeichnet, dass die Dämpfungseinrichtung (10) eine transparente Maske (11) mit Bereichen unterschiedlicher Lichtdurchlässigkeit umfasst und dass die Maske (11) auf einer Verschiebeeinrichtung (12) angeordnet ist, welche gemäss in der Rechen- und Auswerteeinheit (5) generierten Steuersignalen, die an eine x-y-Steuereinheit (13) der Verschiebeeinrichtung (12) weitergeleitet werden, in einer zur Transportebene (T) der Kopiervorlage (N) parallelen Ebene (E) im Strahlengang (L) der Kopierlichtquelle (6) verschiebbar ist.

14. Vorrichtung nach Patentanspruch 13, dadurch gekennzeichnet, dass die Maske (11) Graubereiche unterschiedlicher Dichte umfasst.

15. Vorrichtung nach Patentanspruch 13 oder 14, dadurch gekennzeichnet, dass die Verschiebeebene (E) ausserhalb des Fokussierbereiches der Projektionsoptik (7) angeordnet ist, und insbesondere zwischen der Kopierlichtquelle (6) und der Kopiervorlage (N) angeordnet ist.

16. Vorrichtung nach Patentanspruch 15, dadurch gekennzeichnet, dass die Maske (11) als Rastergraphik mit Schwärzungspunkten unterschiedlicher Grösse ausgebildet ist.

17. Vorrichtung nach einem der Patentansprüche 13- 16, dadurch gekennzeichnet, dass die Maske (11) wenigstens einen Bereich von mindestens der Grösse der Abmessungen der Kopiervorlage (N) aufweist, der das Kopierlicht im wesentlichen ungehindert passieren lässt.

18. Vorrichtung nach einem der Patentansprüche 13-17, dadurch gekennzeichnet, dass die Maske (11) mindestens vier mal grösser ist als die Fläche der abzubildenden Kopiervorlage (N).

19. Vorrichtung nach einem der Patentansprüche 13-18, dadurch gekennzeichnet, dass die Maske (11) als Folie ausgebildet ist, welche auf zwei motorisch antreibbare Rollen (15, 16) auf- und abspulbar und auswechselbar ist, und dass die Rollen (15, 16) mit der Folie auf einem horizontal und/oder vertikal motorisch verschiebbaren Schlitten (12) angeordnet sind.

20. Vorrichtung nach Patentanspruch 19, dadurch gekennzeichnet, dass die Folie in einer Kassette (14) angeordnet ist, dass die Rollen (15, 16) der Kassette (14) an zwei auf dem Verschiebeschlitten ( 12) angeordnete Motoren (17, 18) lösbar ankuppelbar sind, und dass die Kassette (14) als Gesamtheit auswechselbar ist.

21. Vorrichtung nach einem der Patentansprüche 13-18, dadurch gekennzeichnet, dass die Maske (11) als plane Platte ausgebildet ist und auf einem in horizontaler (x) und in vertikaler (y) Richtung motorisch verschiebbaren Schlitten (12) auswechselbar angeordnet ist.

22. Vorrichtung nach einem der Patentansprüche 19-21, dadurch gekennzeichnet, dass der Schlitten (12) in der Verschiebeebene (E) kontinuierlich drehbar ist.

23. Vorrichtung nach einem der Patentansprüche 13-22, dadurch gekennzeichnet, dass die Rechen- und Auswerteeinheit (5) mit einer Bildschirmeinheit (19) gekoppelt ist, zur Darstellung der in der Rechen- und Auswerteeinheit (5) simulierten dichtekorrigierten Kopie (P) der Kopiervorlage (N).

## Claims

1. An exposure control process for influencing by areas the density of photographic copies (P), in which a copy master (N) is scanned in a measuring station (1) by areas, preferably by points, by the light beam from a measuring light source (3); the measuring light transmitted or reflected by the copy master (N) is detected by a detection device (4) and converted into electrical signals corresponding to densities of the scanning areas; the electrical measuring signals are supplied to a computing and evaluating unit (5) and evaluated to determine density- and colour-correction values which are used to determine requisite quantities of copying light and exposure times; the determined exposure times are used to control a source (6) of copying light in an exposure station (2), and the intensity of the copying light impinging on the entire copy master (N) is attenuated by areas in accordance with predetermined criteria with the aid of an attenuating device (10), which process comprises using as attenuating device (10) a mask (11) having locally different light permeabilities; correlating the individual densities of the copy master (N) with the spatial coordinates of the associated scanning areas in the transport plane (T) of the copy master (N) and intermediately storing the individual densities, preferably in matrix form, in the computing and evaluating unit (5); determining a density range of the copy master (N) from the location-dependent densities; comparing the location-dependent density variation of the copy master (N) with a stored location-dependent density variation of the mask (11), which is preferably stored in matrix form equivalent in terms of the location resolution, if a predeterminable limit value for the density range is exceeded; selecting the area of the mask (11) having a location-dependent density variation closest to the inverse location-dependent density variation of the copy master (N); passing the spatial coordinates thus determined of the determined density variation of the partial area of the mask (11) to an x-y control device (13) of a displacing device (12) for the mask (11); and displacing the mask (11) in accordance with the determined spatial coordinates in the beam path (L) of the copying light source (6) such that the selected partial area of the mask is entirely exposed to the copying light from the copying light source (6).

2. A process according to patent claim 1, which comprises determining the similarity of the sought density range of the mask (11) to the inverted location-dependent density variation of the copy master (N) using a least squares analysis such that

$$\sum_{x=0}^{X} \sum_{y=0}^{Y} [K(x_0+x, y_0+y) - \overline{K(x_0, y_0)} + a \cdot (N(x,y) - \overline{N})]^2 = MIN$$

represents a minimum,
where x and y are the spatial coordinates of the location-dependent density variation of the copy master (N) parallel with and perpendicular to the direction of transport of the copy master (N), respectively;
X and Y signify a number of scanning points of the copy master (N) parallel with and perpendicular to the direction of transport, respectively;
$x_0$, $y_0$ are line and column numbers, respectively (spatial coordinates) of a corner element of a partial mask matrix resulting from comparative superposition of density matrices of the mask (11) and of the copy master (N);
$N(x,y)$ is the density variation of the copy master (N);
$\overline{N}$ is the average density of the copy master (N);
$K(x_0+x, y_0+y)$ represents the location-dependent density variation of the partial area of the mask (11) selected;
$\overline{K(x_0, y_0)}$ represents the average density of the mask area selected; and
a is a scaling factor.

3. A process according to either patent claim 1 or patent claim 2, wherein the limit value of the contrast range of the copy master (N) is chosen as a density unit.

4. A process according to patent claim 3, wherein the scaling factor a is chosen from the range of values larger than zero and smaller than one, in such a manner that the contrast range of the photographic copy (P) produced amounts to a maximum of two density units.

5. A process according to any one of the preceding patent claims, wherein the mask (11) is displaced in a plane (E) extending parallel to the transport plane (T) of the copy master (N) between the copying light source (6) and the copy master (N).

**6.** A process according to patent claim 5, wherein the mask (11) is displaced in a plane (E) outside the focusing range of a projection optics (7) in the exposure station (2).

**7.** A process according to patent claim 6, wherein a mask (11) is used that is formed as a halftone graphic in different grey steps, with blackening points of different sizes.

**8.** A process according to any one of the preceding patent claims, wherein the mask (11) is displaced from a rest position outside the beam path (L) of the source (6) of copying light into the beam path (L).

**9.** A process according to any one of patent claims 1 to 7, wherein the mask (11) is located during the analysis of the copy master under the source (6) of copying light in a manner such that the copying light from the copying light source (6) impinges on a partial area (C) of the mask (11), through which the copying light passes essentially without hindrance.

**10.** A process according to any one of the preceding patent claims, wherein a flat plate is used as the mask (11) and the determined partial area of the mask is correctly positioned by displacing a motor-driven displacing slide (12) parallel and perpendicularly to the direction of transport of the copy master (N).

**11.** A process according to any one of patent claims 1 to 7, wherein the mask (11) is in the form of a film wound onto two motor-driven rollers (15, 16) that are in turn mounted on a motor-driven slide (12) displaceable parallel and/or perpendicularly to the direction of transport of the copy master (N), and wherein to position the determined partial mask area, on the one hand the slide (12) is displaced parallel (x) and/or perpendicularly (y) to the direction of transport into the beam path (L) of the copying light source (6), and on the other hand the second coordinate position (y or x) is established by winding the film from one roller (15 or 16) onto the other (16 or 15).

**12.** A process according to any one of the preceding patent claims, which comprises superimposing, inverting and converting the measured densities of the copy master (N), the determined density- and colour-corrections, and the location-dependent density values of the selected partial mask area into video signals in the computing and evaluating unit (5) and passing on the signals thus formed to an image screen unit (19) in which a simulated image of the density-corrected photographic copy (P) to be produced is generated.

**13.** A photographic copying apparatus for the production of photographic copies (P) of copy masters (N), having a measuring station (1) comprising a source (3) of measuring light and a detector device (4), and having a computing and evaluating unit (5) and an exposure station (2) having a projection arrangement with a source (6) of copying light, servocontrolled colour filters (8), a shutter (9) and projection optics (7), and an attenuating device (10) for attenuating the intensity of the copying light by areas, wherein the attenuating device (10) comprises a transparent mask (11) with areas of different light permeabilities, and wherein the mask (11) is mounted on a displacing device (12) which is displaceable in response to control signals generated in the computing and evaluating unit (5) and transmitted to an x-y control unit (13) of the displacing device (12), the displacing device (12) being displaceable in a plane (E) parallel to the transport plane (T) of the copy master (N), in the beam path (L) of the copying light source (6).

**14.** An apparatus according to patent claim 13, wherein the mask (11) comprises grey areas of different densities.

**15.** An apparatus according to either patent claim 13 or patent claim 14, wherein the plane (E) of displacement is located outside the focusing range of the projection optics (7) and especially between the source (6) of copying light and the copy master (N).

**16.** An apparatus according to patent claim 15, wherein the mask (11) is formed as a halftone graphic with blackening points of different sizes.

**17.** An apparatus according to any one of patent claims 13 to 16, wherein the mask (11) comprises at least one area at least as large as the dimensions of the copy master (N), through which the copying light passes essentially without hindrance.

**18.** An apparatus according to any one of patent claims 13 to 17, wherein the mask (11) is at least four times larger than the area of the copy master (N) to be reproduced.

19. An apparatus according to any one of patent claims 13 to 18, wherein the mask (11) is in the form of a replaceable film that may be wound and unwound onto and from two motor-driven rollers (15, 16) and wherein the rollers (15, 16) are mounted together with the film on a slide (12) displaceable by a motor in a horizontal and/or vertical direction.

20. An apparatus according to patent claim 19, wherein the film is housed in a cassette (14), the rollers (15, 16) of the cassette (14) being releasably coupled to two motors (17, 18) mounted on the displacing slide (12); and the cassette (14) can be replaced as a unit.

21. An apparatus according to any one of patent claims 13 to 18, wherein the mask (11) is in the form of a flat plate and is mounted replaceably on a slide (12) displaceable by a motor in a horizontal direction (x) and a vertical direction (y).

22. An apparatus according to any one of patent claims 19 to 21, wherein the slide (12) may be continuously rotated in its plane (E) of displacement.

23. An apparatus according to any one of claims 13 to 22, wherein the computing and evaluating unit (5) is coupled to an image screen unit (19) to display the density-corrected copy (P) of the copy master (N) simulated in the computing and evaluating unit (5).

**Revendications**

1.  Procédé de commande d'exposition pour modifier zone par zone la densité de tirages photographiques (P), dans lequel un original à reproduire (N) est exploré zone par zone, de préférence point par point, dans un poste de mesure (1), par le faisceau de rayons lumineux d'une source de lumière de mesure (3), la lumière de mesure transmise ou réfléchie par l'original (N) est détectée par un système détecteur (4) et convertie en signaux électriques qui correspondent aux densités des zones explorées, les signaux de mesure électriques sont envoyés à une unité de calcul et d'exploitation (5) et exploités en vue de l'établissement de valeurs de correction de densité ou de couleur, à l'aide desquelles sont déterminées des quantités de lumière de tirage et des temps d'exposition nécessaires, les temps d'exposition déterminés étant utilisés pour commander une source de lumière de tirage (6) dans un poste d'exposition (2) et l'intensité de la lumière de tirage, appliquée à l'ensemble de l'original (N), étant affaiblie, par zone, selon des critères préfixés, à l'aide d'un dispositif d'atténuation (10), procédé caractérisé en ce que, comme dispositif d'atténuation (10), on utilise un masque (11) ayant une perméabilité à la lumière localement variable, que l'on associe les différentes densités de l'original (N) aux coordonnées de lieu des zones d'exploration correspondantes dans le plan de transport (T) de l'original (N) et que l'on mémorise ces densités temporairement, de préférence sous la forme d'une matrice, dans l'unité de calcul et d'exploitation (5), que l'on détermine, à partir des densités fonction du lieu, une étendue de densité de l'original (N), que, en cas de dépassement d'une valeur limite pouvant être préfixée pour l'étendue de densité, on compare la variation ou allure de densité fonction du lieu de l'original (N) avec une allure de densité fonction du lieu du masque (11), allure qui est mémorisée de préférence sous la forme d'une matrice équivalente pour ce qui concerne la résolution locale, que l'on sélectionne la zone du masque (11) dont l'allure de densité fonction du lieu est la plus proche de l'allure de densité fonction du lieu inverse de l'original (N), que l'on transmet les coordonnées de lieu ainsi établies de l'allure de densité déterminée de la zone partielle du masque (11) à un dispositif de commande x-y (13) d'un dispositif de translation (12) pour le masque (11) et que l'on produit le déplacement du masque (11), en conformité avec les coordonnées de lieu établies, dans la marche des rayons (L) de la source de lumière de tirage (6), de manière que la zone partielle sélectionnée du masque soit exposée dans sa totalité à la lumière de tirage de la source de lumière de tirage (6).

2. Procédé selon la revendication 1, caractérisé en ce que l'on détermine la ressemblance de la zone de densité recherchée du masque (11) avec l'allure de densité fonction du lieu inversée de l'original (N) selon le principe de la plus petite erreur quadratique, de manière que

$$\sum_{x=0}^{X} \sum_{y=0}^{Y} [K(x_0+x, y_0+y) - \overline{K(x_0, y_0)} + a \cdot (N(x,y)-\overline{N})]^2 = MIN$$

représente un minimum, expression dans laquelle x et y représentent les coordonnées de lieu de l'allure de densité fonction du lieu de l'original (N), respectivement parallèlement et transversalement à la direction de transport de l'original (N);

X et Y représentent le nombre de points d'exploration de l'original (N), respectivement parallèlement et transversalement à la direction de transport;

$x_0$, $y_0$ représentent respectivement le numéro de ligne et le numéro de colonne (coordonnées de lieu) d'un élément d'angle d'une matrice partielle de masque résultant de la superposition comparative des matrices de densité du masque (11) et de l'original (N);

$N(x, y)$ est la variation ou allure de densité de l'original (N);

$\overline{N}$ est la densité moyenne de l'original (N);

$K(x_0+x, y_0+y)$ décrit l'allure de densité fonction du lieu de la zone partielle sélectionnée du masque (11);

$\overline{K}(x_0, y_0)$ est la densité moyenne de la zone de masque sélectionnée; et

a représente un facteur de cadrage.

3. Procédé selon la revendication 1 ou 2, caractérisé en ce que l'on choisit la valeur limite pour l'étendue du contraste de l'original (N) de manière qu'elle corresponde à une unité de densité.

4. Procédé selon la revendication 3, caractérisé en ce que l'on choisit le facteur de cadrage a dans une plage de valeurs supérieures à zéro, mais inférieures à l'unité, de manière que l'étendue du contraste du tirage photographique (P) produit corresponde tout au plus à deux unités de densité.

5. Procédé selon une des revendications précédentes, caractérisé en ce que l'on déplace le masque (11) dans un plan (E) s'étendant parallèlement au plan de transport (T) de l'original (N) entre la source de lumière de tirage (6) et l'original (N).

6. Procédé selon la revendication 5, caractérisé en ce que l'on déplace le masque (11) dans un plan (E) situé en dehors de la zone de focalisation d'une optique de projection (7) prévue au poste d'exposition (2).

7. Procédé selon la revendication 6, caractérisé en ce qu'on utilise un masque (11) réalisé en différents échelonnements de gris sous la forme d'un tracé graphique tramé avec des points de noircissement de grosseurs différentes.

8. Procédé selon une des revendications précédentes, caractérisé en ce que l'on déplace le masque (11) à partir d'une position de repos située en dehors de la marche des rayons (L) de la source de lumière de tirage (6) jusque dans cette marche de rayons (L).

9. Procédé selon une des revendications 1 - 7, caractérisé en ce que, pendant l'analyse de l'original, on place le masque (11) sous la source de lumière de tirage (6), de manière que la lumière de tirage de cette source (6) soit appliquée à une zone partielle (C) du masque (11) laissant passer la lumière de tirage essentiellement sans entrave.

10. Procédé selon une des revendications précédentes, caractérisé en ce que l'on utilise une plaque plane comme masque (11) et que l'on positionne convenablement la zone partielle de masque déterminée, parallèlemement et transversalement à la direction de transport de l'original (N), par le déplacement d'un chariot de translation (12) commandé par moteur.

11. Procédé selon une des revendications 1 - 7, caractérisé en ce que le masque (11) est réalisé sous la forme d'une feuille enroulée sur deux rouleaux (15, 16) commandés par moteur et disposés eux-mêmes sur un chariot (12) déplaçable par moteur parallèlement et/ou transversalement à la direction de transport de l'original (N) et que, pour le positionnement de la zone partielle de masque déterminée, on déplace d'une part le chariot (12) parallèlement (x) et/ou transversalement (y) à la direction de transport dans la marche des rayons (L) de la source de lumière de tirage (6) et on ajuste d'autre part la seconde position fixée par les coordonnées (y ou x) par le déroulement de la feuille de l'un (15 ou 16) des rouleaux et son enroulement sur l'autre rouleau (16 ou 15).

12. Procédé selon une des revendications précédentes, caractérisé en ce que les densités mesurées de l'original (N), les corrections déterminées de la densité ou de la couleur et les valeurs de densité fonction du lieu de la zone partielle de masque sélectionnée sont superposées, inversées et converties en signaux vidéo dans l'unité de calcul et d'exploitation (5) et que les signaux ainsi formés sont transmis à une unité d'écran (19) dans laquelle est générée une image simulée du tirage photographique (P), corrigé en densité, qu'il s'agit de produire.

13. Tireuse photographique pour produire des tirages photographiques (P) d'originaux (N), comprenant un poste de mesure (1) possédant une source de lumière de mesure (3) et un système détecteur (4), et comprenant une unité de calcul et d'exploitation (5), ainsi qu'un poste d'exposition (2) qui comporte un système de projection avec une source de lumière de tirage (3), des filtres de couleurs (8) servocommandés, un obturateur (9) et une optique de projection (7), de même qu'un dispositif d'atténuation (10) pour affaiblir zone par zone l'intensité de la lumière de tirage, tireuse caractérisée en ce que le dispositif d'atténuation (10) comprend un masque transparent (11) avec des zones ayant des perméabilités à la lumière différentes et que le masque (11) est placé sur un dispositif de translation (12) qui est déplaçable, en conformité avec des signaux de commande générés dans l'unité de calcul et d'exploitation (5) et transmis à une unité de commande x-y (13) du dispositif de translation (12), dans un plan (E) parallèle au plan de transport (T) de l'original (N) à l'intérieur de la marche des rayons (L) de la source de lumière de tirage (6).

14. Dispositif selon la revendication 13, caractérisé en ce que le masque (11) comporte des zones grises de différentes densités.

15. Dispositif selon la revendication 13 ou 14, caractérisé en ce que le plan de translation (E) est prévu en dehors de la zone de focalisation de l'optique de projection (7) et est disposé en particulier entre la source de lumière de tirage (6) et l'original (N).

16. Dispositif selon la revendication 15, caractérisé en ce que le masque (11) est réalisé comme un tracé graphique tramé avec des points de noircissement de différentes grosseurs.

17. Dispositif selon une des revendications 13 - 16, caractérisé en ce que le masque (11) comporte au moins une zone, ayant au moins la grandeur correspondant aux dimensions de l'original (N), qui laisse passer la lumière de tirage essentiellement sans entrave.

18. Dispositif selon une des revendications 13 - 17, caractérisé en ce que le masque (11) est au moins quatre fois plus grand que l'aire de surface de l'original (N) à reproduire.

19. Dispositif selon une des revendications 13 - 18, caractérisé en ce que le masque (11) est réalisé comme une feuille enroulable et déroulable sur deux rouleaux (15, 16) commandés par moteur et comme une feuille remplaçable, et que les rouleaux (15, 16) sont disposés ensemble avec la feuille sur un chariot (12) déplaçable en translation, par moteur, dans le sens horizontal et/ou dans le sens vertical.

20. Dispositif selon la revendication 19, caractérisé en ce que la feuille est placée dans une cassette (14), que les rouleaux (15, 16) de la cassette (14) sont accouplables de façon détachable à deux moteurs (17, 18) montés sur le chariot de translation (12) et que la cassette (14) est remplaçable dans son ensemble.

21. Dispositif selon une des revendications 13 - 18, caractérisé en ce que le masque (11) est réalisé comme une plaque plane et est disposé de façon à pouvoir être remplacé sur un chariot (12) déplaçable en translation, par moteur, en direction horizontale (x) et en direction verticale (y).

22. Dispositif selon une des revendications 19 - 21, caractérisé en ce que le chariot (12) peut être tourné de façon continue dans le plan de translation (E).

23. Dispositif selon une des revendications 13 - 22, caractérisé en ce que l'unité de calcul et d'exploitation (5) est couplée à une unité d'écran (19) en vue de la représentation du tirage (P), corrigé en densité, de l'original (N), tirage corrigé qui est simulé dans l'unité de calcul et d'exploitation (5).

**Fig. 1**

_Fig. 2_

_Fig. 3_